# FASCICULE DE BREVET EUROPEEN

(11) **EP 0 730 291 B1**
(45) Date de publication et mention de la délivrance du brevet: **10.03.1999**
(21) Numéro de dépôt: 96400430.3
(22) Date de dépôt: 29.02.1996
(51) Int. Cl.: H01J 47/06, H01J 47/00, G01T 1/29

(54) **Dispositifs d'imagerie médicale en rayonnement ionisant X ou gamma à faible dose**
Vorrichtung zur Erzeugung medizinischer Bilder mittels ionisierender Röntgen- oder niederdosis Gammastrahlen
Ionizing X-ray or low dosis gamma medical imaging devices

(30) Priorité: 03.03.1995 FR 9502518
(43) Date de publication de la demande: 04.09.1996
(73) Titulaire: Charpak, Georges, 75005 Paris (FR)
(72) Inventeur: Charpak, Georges, 75005 Paris (FR)
(74) Mandataire: Fréchède, Michel

(56) Documents cités:
- EP-A- 0 678 896
- DE-A- 4 123 871
- US-A- 4 317 038
- NUCLEAR INSTRUMENTS & METHODS IN PHYSICS RESEARCH, SECTION - A: ACCELERATORS, SPECTROMETERS, DETECTORS AND ASSOCIATED EQUIPMENT, vol. A283, no. 3, 10 Novembre 1989, pages 431-435, XP000074054 BARU S E ET AL: "MULTIWIRE PROPORTIONAL CHAMBER FOR A DIGITAL RADIOGRAPHIC INSTALLATION"
- NUCLEAR INSTRUMENTS & METHODS IN PHYSICS RESEARCH, SECTION - A: ACCELERATORS, SPECTROMETERS, DETECTORS AND ASSOCIATED EQUIPMENT, vol. A310, no. 1 / 02, 1 Décembre 1991, pages 545-551, XP000274798 MCKEE B T A ET AL: "DATA ACQUISITION FOR A MEDICAL IMAGING MWPC DETECTOR"

## Description

L'invention concerne les dispositifs d'imagerie médicale en rayonnement ionisant, X ou gamma, à faible dose.

Dans le domaine de l'imagerie médicale en rayonnement X, un problème majeur a consisté jusqu'à ce jour en la difficulté d'absorption par les détecteurs à gaz avec une probabilité voisine de 1 du rayonnement X utilisé en imagerie médicale, sauf à prévoir des dimensions d'épaisseur de ces détecteurs suffisamment importantes, ce qui nuit d'une part à la compacité d'équipements correspondants et d'autre part à leur précision en résolution.

Dans le domaine de la cristallographie en rayonnement X, les énergies de ces rayonnements utilisés sont de l'ordre de 10 keV et le parcours moyen de ces rayonnements dans un gaz tel que le xénon dépasse plusieurs centimètres à la pression atmosphérique, ce qui rend pratiquement impossible la réalisation d'un détecteur précis de grande surface et de faible épaisseur, sauf à augmenter considérablement la pression du gaz, ce qui corrélativement impose des normes mécaniques de construction de ces détecteurs pratiquement prohibitives.

Différentes solutions ont été proposées afin de tenter de remédier aux inconvénients précédemment mentionnés.

Une première solution a consisté, par exemple, à placer la source des rayons X au centre d'une fenêtre sphérique de béryllium, laquelle limite l'entrée d'un espace gazeux absorbant les rayons X. La face arrière de l'espace gazeux, constituant espace de dérive pour des électrons engendrés dans le milieu gazeux par le rayonnement X, comprend une grille concentrique placée à une distance importante, de l'ordre de 10 cm. Le volume de l'espace de dérive est rempli d'un mélange gazeux constitué en grande partie de xénon. Une différence de potentiel est appliquée entre la fenêtre et la grille de sortie, ce qui provoque la dérive des électrons d'ionisation libérés par un faisceau du rayonnement X émis dans une direction donnée de l'espace, le long d'un rayon de la sphère. Des champs électriques appropriés peuvent permettre alors de localiser ces électrons grâce à une chambre à fils et ainsi d'obtenir une image dont la précision n'est pas altérée par l'épaisseur importante du détecteur, car la réponse de l'ensemble est indépendante de la position du point d'absorption de chaque photon X le long d'un rayon de l'espace sphérique. Pour une description de ce mode opératoire, on pourra se reporter à l'article intitulé *"Applications of proportional chambers to some problems in medicine and biology"* publié par G.CHARPAK, Nuclear Instruments and Methods 156 (1978) 1-17, North-Holland Publishing Co. - CERN, Geneva, Switzerland.

Toutefois, le mode opératoire précité ne peut être envisagé pour le domaine de l'imagerie médicale car il est alors nécessaire d'utiliser des rayons X dont l'énergie est supérieure à 25 KeV, la longueur moyenne d'absorption de ces rayons devenant prohibitive à la pression atmosphérique.

D'autres solutions ont été proposées. Parmi celles-ci, l'une d'elles consiste à utiliser des feuilles minces de métaux lourds permettant d'absorber commodément les rayons X. Toutefois, les électrons arrachés à ces feuilles par effet Compton ou photo-électrique ont un parcours moyen beaucoup plus petit que le parcours moyen d'un rayon X. En conséquence, dans le cas où l'on souhaite réaliser un détecteur localisant les rayons X ou gamma au moyen de la localisation de l'électron arraché précité, le détecteur à gaz étant par exemple placé contre la feuille de plomb, l'efficacité réelle du processus mis en oeuvre est en général comprise entre 1/1000 et 1/100.
Afin de surmonter cette difficulté, on a proposé d'attaquer les feuilles minces sous incidence rasante, ou, le cas échéant, de prévoir des structures constituées de feuilles ou tubes placés de telle façon que les électrons Compton ou photo-électriques extraits des feuilles ou des parois des tubes, pénètrent dans les espaces gazeux séparant les feuilles ou emplissant les tubes, y ionisent le gaz, les électrons d'ionisation étant alors extraits puis amenés par un champ électrique dans un espace de dérive où une chambre à fils peut les localiser. Un tel mode opératoire a été décrit notamment par les articles intitulés " *An interesting fall-out of high-energy physics techniques : the imaging of X-rays at various energies for biomedical applications"* par G.CHARPAK et F.SAULI, CERN, Geneva Switzerland, April 1976 et *"The high-density multiwire drift chamber"* par G.CHARPAK, A.P.JEAVONS, R.J.STUBBS, CERN-Data Handling Division DD/74/31, November 1974.

Ces constructions, dont il existe des formes différentes, visent à empiler un grand nombre de feuilles minces, chacune ayant une faible efficacité d'absorption des rayons X, mais en faisant en sorte qu'une seule chambre à fils puisse localiser les électrons extraits de centaines de feuilles successives, assez minces pour laisser sortir les électrons arrachés par les rayons X.

Enfin, une deuxième solution, appliquée en radiographie médicale, a été décrite dans l'article publié par E.A.BABICHEV, S.E.BARU, V.V.GRUSEW, A.G.KHABAKHPASHEV, G.M.KOLACHEV, G.A.SAVINOV, L.I.SEKHTMAN, V.A.SIDOROV, A.I.VOLOBUEV et intitulé *"Digital Radiographic Installation for Medical Diagnostics" - Institute* of Nuclear Physics, Novosibirsk - 1989. Dans cette deuxième solution, les rayons X émis illuminant le corps d'un objet ou d'un patient à observer, sont absorbés dans un espace gazeux rempli de xénon sous pression, 3 Bars, cet espace étant limité par une fente rectiligne ménagée dans une plaque de plomb formant diaphragme et permettant d'engendrer un faisceau d'illumination en nappe. Les électrons d'ionisation produits dans cet espace gazeux par les rayons X absorbés dérivent sous l'effet d'un champ électrique vers une chambre à fils dont les fils, dans un plan parallèle à un plan contenant le faisceau d'illumination en nappe délivré par la fente, sont convergents vers la source ponctuelle d'émission des rayons X.
Il en résulte que les électrons d'ionisation provenant d'un faisceau de rayons du faisceau en nappe émis dans une direction donnée par la source sont concentrés sur un seul fil de la chambre à fils. Une électronique de comptage permet de déterminer le nombre d'impulsions sur chaque fil, ce qui permet d'obtenir une mesure de l'intensité des rayons X transmis dans chacune des directions des fils. Les mesures obtenues ainsi étant spatialement limitées à l'intensité des rayons X du faisceau en nappe délivré par la fente, celle-ci, et la source, sont déplacées le long du corps à observer pour obtenir un balayage de l'ensemble du corps à observer.

La solution précédemment décrite comporte toutefois les inconvénients ci-après.
Pour compenser la variation de gain dans la chambre, engendrée par la divergence des fils, il est nécessaire de faire varier la distance séparant les fils d'anode de la grille ou du plan de cathode, de façon à maintenir constante l'amplification autour d'un fil.
De tels dispositifs impliquent donc une construction très soignée de la chambre et des fils divergents, la précision de détection de l'ensemble restant liée à la qualité de la construction.
En outre, les paramètres de gain étant liés à la structure du dispositif de détection, fils divergents à partir de la direction de la source d'émission des rayons X, le dispositif décrit par l'article précité permet tout au plus une mise en oeuvre adaptée pour une seule configuration déterminée de distance de la source d'émission des rayons X au corps à observer et à la chambre de détection ainsi formée. Il n'est donc pas possible d'envisager des applications ou conditions d'observation variées telles que le requièrent parfois les opérations d'observation médicale.

D'autres dispositifs d'imagerie médicale ont été jusque-là décrits.

En particulier, d'une première part, la demande de brevet européen 95 400 857.8 (numéro de publication 0 678 896) au nom de Monsieur G. CHARPAK, bénéficiant d'une date de priorité antérieure à celle de la présente demande mais publiée postérieurement à cette dernière décrit un dispositif d'imagerie médicale en rayonnement ionisant X ou gamma à faible dose mettant en oeuvre une chambre de dérive, une grille d'amplification proportionnelle et une cathode de détection de l'impact des électrons multipliés par phénomène d'avalanche. Toutefois ce dispositif ne permet pas la mise en oeuvre d'une détection bidimensionnelle, l'électrode de grille d'amplification proportionnelle étant dépourvue de toute fonction de détection.

D'autre part, le document DE-A-4 123 871 décrit un dispositif d'imagerie médicale présentant une structure classique chambre de dérive et chambre à fils remplies d'un gaz permettant d'engendrer des électrons à partir d'un rayonnement ionisant. Ce dispositif ne permet toutefois pas la mise en oeuvre d'une détection bidimensionnelle.

La présente invention vise à apporter des améliorations sensibles aux dispositifs de l'art antérieur, notamment de simplification de construction.

Un autre objet de la présente invention est la mise en oeuvre de dispositifs d'imagerie médicale en rayonnement X ou gamma à faible dose.

Le dispositif d'imagerie médicale en rayonnement ionisant X ou gamma, objet de la présente invention, est défini par la revendication1. Il comporte une source de rayonnement ionisant selon un faisceau divergent, une fente longitudinale formant diaphragme permettant de délivrer un faisceau d'illumination en nappe distribué sensiblement dans un plan contenant la fente longitudinale, et un module de détection d'un faisceau transmis par le faisceau d'illumination en nappe.

Il est remarquable en ce que le module de détection comporte une chambre à dérive et une chambre à fils remplies d'un gaz permettant d'engendrer des électrons. Ces chambres comportent, agencées dans une direction orthogonale au plan contenant la fente et le faisceau d'illumination en nappe, un espace de dérive des électrons comportant une première électrode de cathode, une anode de multiplication proportionnelle des électrons pour engendrer des électrons multipliés et des ions correspondants et une deuxième électrode de cathode placée au voisinage de l'anode de multiplication. L'anode de multiplication et la deuxième électrode de cathode sont constituées par des éléments conducteurs s'étendant dans deux plans parallèles au plan du faisceau d'illumination en nappe selon des directions sensiblement orthogonales pour permettre un repérage bidimensionnel des électrons dans ce plan.

Le dispositif d'imagerie médicale, objet de la présente invention, trouve application à l'imagerie médicale en rayonnement ionisant X ou gamma, à la biologie, et, plus généralement au domaine de la visualisation des corps opaques.

Une description plus détaillée d'un dispositif d'imagerie médicale en rayonnement X ou gamma, conforme à l'objet de la présente invention, sera maintenant donnée ci-après en liaison avec les dessins dans lesquels :
- la figure 1a représente, de manière schématique, une vue générale en coupe longitudinale du dispositif d'imagerie médicale, objet de la présente invention ;
- la figure 1b représente une vue en coupe de la figure 1a, suivant le plan de coupe AA de celle-ci, dans un premier mode de réalisation avantageux ;
- la figure 1c représente un diagramme de tensions continues appliquées à la deuxième cathode du dispositif selon l'invention représenté en figure 1a, pour assurer une compensation de la variation de gain engendrée du fait de la structure spécifique de l'anode ;
- la figure 2a représente de manière schématique une vue générale en coupe longitudinale du dispositif d'imagerie médicale, objet de la présente invention ;
- la figure 2b représente une vue en coupe de la figure 2a, suivant le plan de coupe AA de celle-ci, dans un deuxième mode de réalisation avantageux ;
- la figure 3 représente un mode de réalisation particulier du dispositif objet de la présente invention ;
- les figures 4a et 4b représentent une vue en coupe longitudinale d'un convertisseur à structure multicanaux utilisé pour la mise en oeuvre du dispositif selon l'invention, selon un premier et un deuxième mode d'utilisation ;
- la figure 4c représente une vue de face, selon la flèche, des figures 4a et 4b ;
- la figure 4d représente un mode de réalisation particulier avantageux du convertisseur représenté en figure 4a ou 4b, spécialement destiné à être utilisé avec un rayonnement ionisant complexe, comportant plusieurs niveaux d'énergie ou raies.

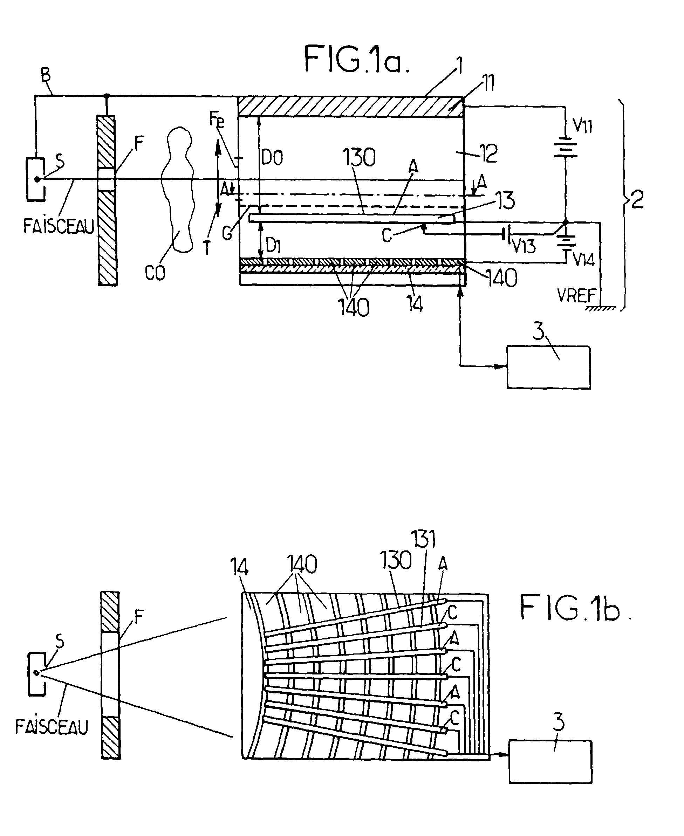

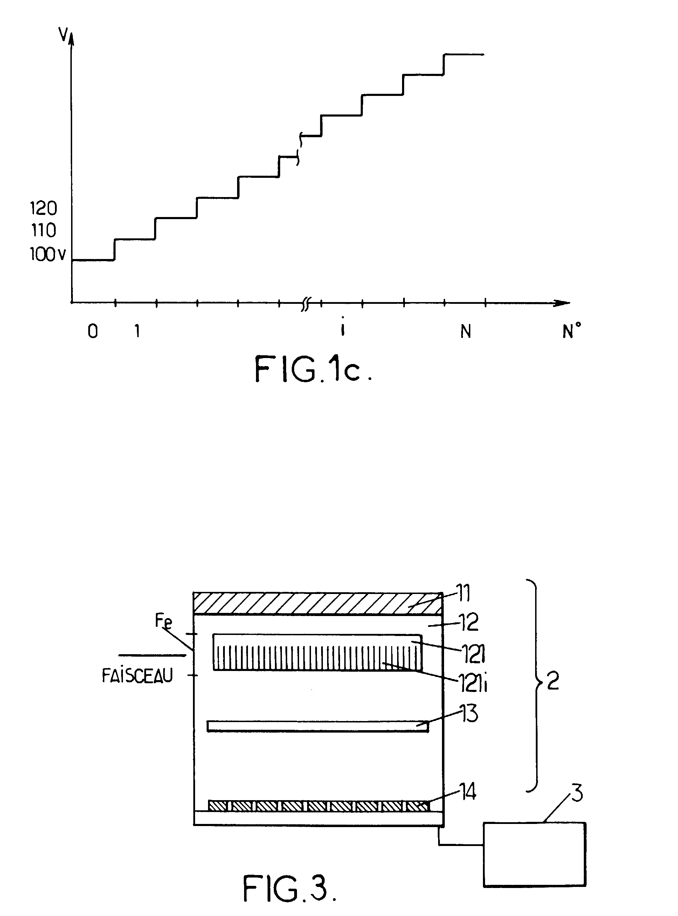

Une description plus détaillée d'un dispositif d'imagerie médicale et des perfectionnements apportés à ce type d'appareil, conformément à l'objet de la présente invention, sera maintenant donnée en liaison avec la figure 1a et les figures suivantes.

D'une manière générale, on indique que, dans l'ensemble des dessins, la proportion des cotes, distances ou dimensions n'est pas respectée, afin de ne pas nuire à la clarté de l'exposé.

Sur la figure 1a, on a représenté une vue en coupe longitudinale, c'est-à-dire selon un plan orthogonal à un plan contenant un faisceau d'illumination en rayonnement ionisant en nappe, ce faisceau d'illumination étant engendré par le dispositif objet de la présente invention. Ainsi, le plan du faisceau d'illumination est orthogonal au plan de la feuille sur laquelle est représentée la figure 1a.

Ainsi que représenté sur la figure précitée, on indique que le dispositif objet de la présente invention comporte une source de rayonnement ionisant, notée S, émettant un faisceau de rayonnement ionisant divergent, et une fente longitudinale, notée F, laquelle s'étend orthogonalement au plan de la feuille sur laquelle est représentée la figure la. Cette fente F forme un diaphragme et permet de délivrer un faisceau d'illumination en nappe. Le faisceau en nappe est de manière classique distribué sensiblement dans un plan contenant la fente longitudinale F et la source S. Conformément à un aspect particulièrement avantageux du dispositif d'imagerie médicale, objet de la présente invention, on indique que celui-ci comprend un module de détection 1, lequel permet de détecter un faisceau transmis par un corps CO à observer. Le corps CO est le corps d'un patient par exemple, lequel est illuminé par le faisceau d'illumination en nappe, le corps à observer transmettant alors un faisceau transmis de rayonnement ionisant. Ce faisceau transmis a été soumis à des absorptions différentes en fonction de la densité du corps traversé.

Ainsi que représenté sur la figure la précitée, le module de détection 1 est bien entendu placé de façon à recevoir le faisceau de rayonnement ionisant transmis. De manière classique, la source S, la fente F et le module de détection 1 peuvent être solidaires d'un bâti B, lequel peut être rendu mobile en translation et en rotation par rapport au corps à observer CO, le mouvement de translation et de rotation de l'ensemble étant symbolisé par la flèche T sur la figure 1a.

Selon un aspect particulièrement avantageux du dispositif objet de la présente invention, on indique que le module de détection 1 comprend une chambre à dérive et une chambre à fils successivement, ces chambres étant remplies d'un gaz permettant d'engendrer des électrons suite à l'illumination de ce gaz par le faisceau ionisant transmis.

De manière avantageuse, on indique que les chambre à dérive et chambre d'ionisation sont remplies d'un même gaz tel que du xénon par exemple à une pression supérieure à la pression atmosphérique, de façon à assurer une densité de gaz adéquate.

Le module de détection 1 comprend une fenêtre Fe, placée derrière un collimateur, permettant d'admettre dans l'espace de dérive de la chambre à dérive le faisceau d'illumination transmis afin d'assurer la création des électrons par interaction du rayonnement ionisant et du gaz contenu dans l'espace de dérive précité.

Selon un aspect particulièrement avantageux du dispositif objet de la présente invention, tel que représenté en figure 1a, on indique que les chambres, chambre à dérive et chambre à fils formant le module de détection 1, comportent, agencé dans une direction orthogonale au plan contenant la fente F et le faisceau d'illumination en nappe, un espace de dérive des électrons, noté 12, lequel comporte de manière classique une première électrode de cathode, notée 11.

A l'espace de dérive 12 précité, est également associée, conformément à un aspect particulièrement avantageux du dispositif selon l'invention, une anode de multiplication proportionnelle des électrons, notée 13, permettant d'engendrer des électrons multipliés et des ions correspondants. Les électrons multipliés et les ions correspondants sont engendrés par un phénomène d'avalanche localisé au voisinage de l'anode 13, laquelle forme en fait une électrode de multiplication proportionnelle des électrons. L'espace de dérive 12 peut, le cas échéant, être délimité par une grille intermédiaire G, placée à un potentiel intermédiaire.

En outre, la chambre à fils représentée en figure la associée à l'espace de dérive, comporte au voisinage de l'anode 13, en aval de celle-ci dans le sens de dérive des électrons issus de l'espace de dérive, une deuxième électrode de cathode, notée 14, laquelle est placée au voisinage de l'anode de multiplication 13.

Selon un aspect particulièrement avantageux du dispositif objet de la présente invention, on indique que l'anode de multiplication 13 et la deuxième électrode de cathode 14 sont avantageusement constituées par des éléments conducteurs, 130 respectivement 140, s'étendant dans deux plans parallèles au plan du faisceau d'illumination en nappe selon des directions sensiblement orthogonales pour permettre un repérage bidimensionnel des électrons dans un plan parallèle aux deux plans précités.

Selon une autre caractéristique particulière du dispositif objet de la présente invention tel que représenté en figure 1a, on indique que la chambre à dérive 12 et la chambre à fils délimitées par l'anode de multiplication 13 proportionnelle sont formées par une chambre asymétrique, ainsi que représenté sur la figure précitée. Dans ces conditions, l'espace de dérive 12 présente dans la direction orthogonale au plan contenant la fente et le faisceau d'illumination, une dimension d0 supérieure à la distance d1 dans la même direction séparant l'anode de multiplication 13 proportionnelle de la deuxième électrode de cathode 14. De même, la distance entre la grille G et le plan 13 peut être plus grande que la distance entre anode de multiplication 13 - deuxième électrode de cathode 14.

D'une manière générale, ainsi que représenté sur la figure la, on indique que la première cathode 11 est portée à une tension négative V₁₁ par l'intermédiaire d'une source de polarisation adéquate par rapport à la tension de référence VREF. Le potentiel de la première cathode 11 peut par exemple être pris égal à V₁₁ = -10kV.

En outre, on indique que l'anode de multiplication proportionnelle 13 peut être portée par exemple au potentiel de référence.

Toutefois, afin de constituer l'anode de multiplication proportionnelle, on indique que celle-ci peut être formée par des fils rectilignes contenus dans un même plan, certains de ces fils étant portés à la tension de référence VREF et des fils intermédiaires à ces derniers étant au contraire portés par exemple à une tension négative par rapport à cette tension de référence, désignée par V₁₃ sur la figure la, pour constituer successivement une alternance de fils d'anode notée A, respectivement de fils de cathode, notée C. Le potentiel V₁₃ peut par exemple être égal à : -1kV par exemple par rapport à la tension de référence.

Enfin, on indique que la deuxième cathode 14 constituée par des éléments conducteurs 140 s'étendant dans un plan parallèle au plan de l'anode de multiplication proportionnelle 13, peut alors être portée à un potentiel, noté V₁₄ sur la figure 1a.

D'une manière générale, on indique que ce potentiel V₁₄ est un potentiel moyen pour l'ensemble des bandes conductrices 140 constituant la deuxième cathode 14.

Du point de vue du fonctionnement, on comprend que les fils conducteurs 130 représentés en figure 1a, constituant l'anode de multiplication proportionnelle 13 et les bandes 140 constitutives de la deuxième cathode 14, peuvent avantageusement être reliées à des moyens de comptage 3, lesquels permettent de repérer dans les directions orthogonales des fils 130, respectivement des bandes 140, les impacts des électrons multipliés formés par avalanche afin de permettre un repérage bidimensionnel de ces électrons dans un plan sensiblement parallèle au plan du faisceau d'illumination.

Un premier mode de réalisation particulièrement avantageux du dispositif d'imagerie médicale, objet de la présente invention, sera maintenant décrit en liaison avec la figure 1b.

La figure 1b est une vue en coupe selon le plan de coupe AA de la figure 1a.

Ainsi que représenté sur la figure 1b, on indique que l'anode de multiplication 13 est formé par des fils conducteurs formant une grille de multiplication proportionnelle, ces fils conducteurs étant notés 130 sur la figure 1b.

On comprend en particulier que les fils 130 peuvent avantageusement être reliés au potentiel de référence alors que les fils 131 peuvent au contraire être reliés à la source de tension V₁₃ représentée sur la figure 1a, de façon à constituer des fils d'anode A respectivement de cathode C successives et ainsi réaliser une anode d'amplification proportionnelle.

De manière typique, on indique que les fils d'anode A 130 peuvent être constitués par des fils de faible section, c'est-à-dire d'un diamètre compris entre 10 à 20 µm, alors que les fils de cathode C 131 peuvent présenter un diamètre compris entre 40 et 60 µm.

Ainsi qu'on l'a représenté sur la figure 1b, on indique que les fils conducteurs 130, 131 formant l'anode de multiplication proportionnelle 13 sont placés dans le plan contenant l'anode de multiplication 13 précitée et dirigés de façon à converger vers la source S du faisceau d'illumination.

Dans ce mode de réalisation tel que représenté en figure 1b, la deuxième électrode de cathode 14 est alors avantageusement formée par des bandes électriquement conductrices concentriques, centrées sur la source du faisceau d'illumination.

L'ensemble des bandes électriquement conductrices constituant la deuxième cathode 14 est soumis à un gradient de potentiel croissant selon la position de chaque bande par rapport à la source S du faisceau d'illumination. Une telle mesure permet de compenser la variation du gain de multiplication des électrons de l'électrode d'anode d'amplification 13 du fait de la divergence des fils constituant celle-ci.

On comprend alors que l'agencement des fils 130, 131 constitutifs de l'anode de multiplication proportionnelle 13 et l'agencement correspondant des bandes conductrices 140 de la deuxième cathode 14 peuvent permettre alors d'effectuer un repérage bidimensionnel selon une détection sensiblement en coordonnées polaires de l'impact des électrons multipliés par rapport à la source S.

Dans ce but, on comprend bien sur, ainsi que représenté en figure 1b, que les fils 130 constitutifs de l'anode de multiplication proportionnelle sont reliés à un système de comptage, chaque fil repérant une coordonnée polaire, sans qu'il soit nécessaire de compter les signaux induits sur les bandes 140. La liaison entre le module de comptage 3 peut alors être réalisée de façon à compter les impulsions, les variations de potentiel provoquées par l'impact des électrons multipliés par avalanche au niveau des bandes et des fils précités étant alors transmises pour comptage au module de comptage 3 précédemment mentionné.

En ce qui concerne le mode de réalisation avantageux représenté en figure 1b, on indique que par rapport aux dispositifs de l'art antérieur tels que précédemment cités dans la description, le dispositif d'imagerie médicale objet de l'invention présente un intérêt majeur dans la mesure où il n'est plus nécessaire d'assurer un intervalle de distance variable entre les fils constitutifs de l'anode de multiplication proportionnelle 13 et de la deuxième cathode 14 ainsi que proposé dans les dispositifs de l'art antérieur afin de compenser la variation de gain le long des fils d'anode amplificatrice 13.

Un autre avantage du mode de réalisation précité réside dans le fait que la chambre peut ainsi être profonde sans inconvénient.

Dans un mode de réalisation pratique, on indique que les bandes conductrices 140 peuvent être formées sur une plaquette de type plaquette de circuit imprimé, ces bandes pouvant présenter une largeur de quelques mm à 1 cm et placées chacune, ainsi que représenté en figure 1c, à un potentiel constant pour chacune des bandes, la bande la plus proche de la source S étant placée par exemple à un potentiel de 100 volts et chaque bande successivement voyant son potentiel augmenter de 10 volts par exemple en fonction du rang de la bande considérée.

Compte tenu du mode de réalisation de la figure 1a et 1b, on indique qu'il est ainsi possible de construire des chambres dont les dimensions planes dans le plan de la figure 1b par exemple peuvent être égales à 10 cm, dans la direction de propagation du faisceau d'illumination, et de 50 cm environ dans une direction perpendiculaire à cette première direction de propagation du faisceau d'illumination.

Sur la figure 1b, on a volontairement méconnu les proportions des dimensions précitées afin de ne pas nuire à la clarté du dessin.

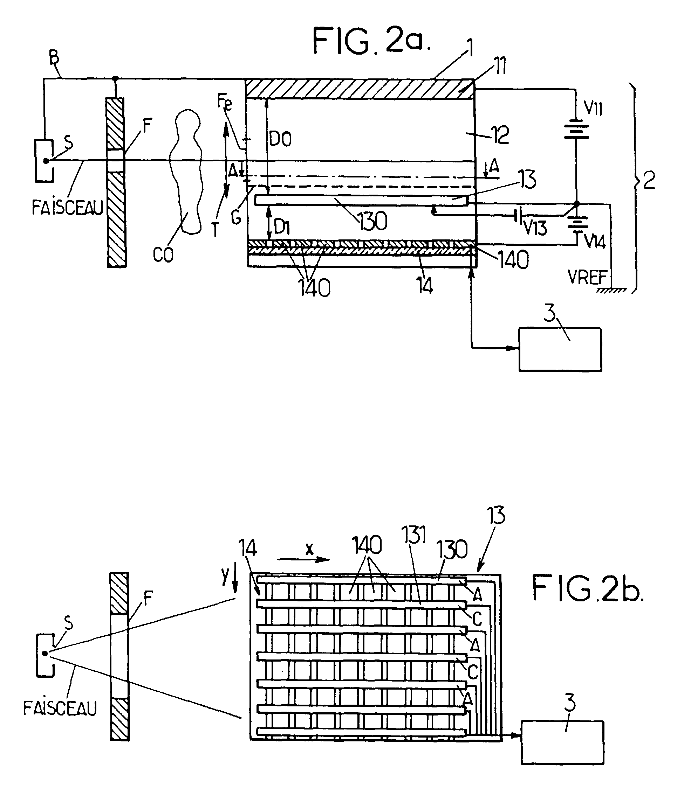

Une description plus détaillée d'une deuxième variante de réalisation du dispositif d'imagerie médicale objet de la présente invention, sera maintenant donnée en liaison avec les figures 2a et 2b.

Sur la figure 2a, les mêmes références représentent les mêmes éléments que ceux précédemment décrits en liaison avec la figure la et le fonctionnement du dispositif objet de la présente invention tel que représenté en figure 2a est semblable à celui du dispositif dans le premier mode de réalisation représenté sur la figure 1a.

Toutefois, ainsi qu'on l'a représenté sur la figure 2b, selon une vue en coupe selon le plan de coupe AA de la figure 2a, l'anode de multiplication 13 proportionnelle est formée par des fils conducteurs formant une grille de multiplication proportionnelle, ces fils conducteurs portant à nouveau les références 130 et 131, formant de la même manière des fils d'anode A et de cathode C successifs mais étant cette fois dirigés vers la source S mais parallèles entre eux.

Dans ce cas, la deuxième électrode de cathode 14 est alors formée par des bandes électriquement conductrices parallèles entre elles et s'étendant dans une direction orthogonale à celle des fils conducteurs 130, 131 formant la grille de multiplication proportionnelle 13.

On comprend ainsi que les bandes conductrices 140 et les fils 130, 131 tels que représentés en figure 2b étant connectés au module de comptage 3, il est alors possible d'effectuer un repérage bidimensionnel selon une détection en coordonnées cartésiennes x,y de l'impact des électrons multipliés.

Dans le deuxième mode de réalisation tel que représenté en figures 2a et 2b, on indique que l'espace d1 séparant l'anode d'amplification proportionnelle 130 et la deuxième cathode 14 peut être choisi très faible, c'est-à-dire de l'ordre d'un demi-millimètre par exemple.

Les bandes 140 peuvent être constituées sur un circuit imprimé et présenter une largeur de 2,5 mm.

Dans le mode de réalisation des figures 2a et 2b, un rayon X ou gamma émis dans une direction donnée θ engendre des électrons libérés dans le gaz de la chambre de dérive le long d'un segment de droite qui recoupe plusieurs fils 130, 131 de l'anode de multiplication proportionnelle 13.

Le repérage des électrons multipliés dans les directions x et y selon l'adresse des fils respectivement des bandes soumis à l'impact des avalanches ainsi formées le long de la trajectoire précitée, permet alors un repérage de la direction précitée dans le repère cartésien précédemment mentionné.

Le deuxième mode de réalisation tel que représenté en figures 2a et 2b, en raison de l'utilisation d'un intervalle d1 de valeur faible séparant l'anode d'amplification proportionnelle de la deuxième cathode 14, permet d'utiliser des taux de comptage très élevés tels que ceux nécessités par exemple en radiographie en rayonnement X.

A titre d'exemple non limitatif, on indique que, pour une anode d'amplification proportionnelle comportant sensiblement un fil d'anode 130 ou 131 par millimètre, il est aisé d'atteindre des taux de comptage de 10⁵ impulsions/seconde, par millimètre de fil. Pour une longueur de fil de 10 cm ainsi que mentionné précédemment, dans la direction x, il est ainsi possible d'atteindre une fréquence de comptage de 1MHz par fil.

La mise en forme des signaux obtenus peut alors être réalisée au moyen de circuits électroniques permettant d'engendrer une impulsion carrée de largeur 10 nanosecondes sensiblement.

Les signaux obtenus sur les bandes 140 sont de signes opposés et peuvent facilement être mis en oeuvre pour effectuer un repérage selon les coordonnées cartésiennes x,y.

Il est ainsi possible de constituer une matrice de détection comportant 500 fils par exemple et 40 bandes, et des moyens de mémorisation des impulsions détectées par l'ensemble matriciel précité doivent alors être prévus afin d'obtenir une carte des impacts des électrons multipliés dans le plan de détection.

Alors que dans les dispositifs de l'art antérieur, la convergence des fils vers la source S présentait l'avantage d'une détection intégrée sur un seul et même fil pour une direction θ donnée correspondant à celle du fil, le dispositif d'imagerie médicale tel que représenté en figures 2a et 2b permet au contraire une détection pour une direction θ donnée par rapport à une matrice cartésienne x,y dont la seule contrainte est la mise en oeuvre de circuits mémoire capables de mémoriser les positions ou adresses des points d'impact dans les directions x et y précitées.

Il faut noter en outre qu'il est facile de subdiviser chaque bande imprimée 140 en autant de segments indépendants si nécessaire, afin d'autoriser une adaptation à la vitesse de comptage permise par l'électronique utilisée.

Dans le mode de réalisation tel que représenté en figures 2a et 2b, on indique que ce dispositif présente un avantage majeur dans la mesure où il suffit de modifier les programmes de traitement des impulsions détectées dans les directions x et y en fonction de la position relative de la matrice de détection ainsi constituée par rapport à la source S, alors que dans le mode de réalisation décrit en liaison avec les figures 1a et 1b et dans les dispositifs de l'art antérieur, la convergence des fils constitutifs de l'anode multiplicatrice 13 impose pratiquement l'utilisation d'une matrice de détection dont la distance est sensiblement fixe par rapport à la source S, ce qui peut apporter des limitations sérieuses quant à l'utilisation clinique de tels dispositifs.

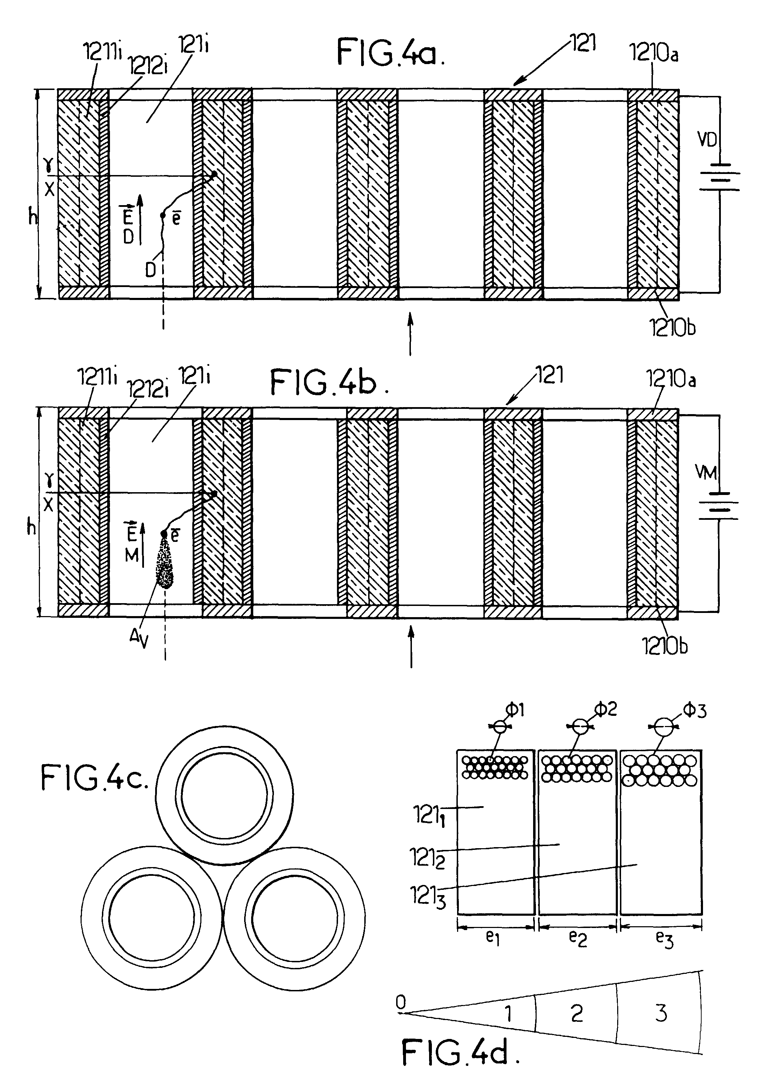

Enfin, ainsi que représenté en figure 3, le dispositif d'imagerie médicale objet de la présente invention, tant dans sa première que dans sa deuxième variante de réalisation, peut être muni dans l'espace de dérive 12 d'un convertisseur 121 de rayons ionisants-électrons, ce convertisseur 121 étant constitué par une structure mécanique multicanaux 121i. Chaque canal de la structure multicanaux s'étend longitudinalement dans une direction parallèle à la direction orthogonale au plan contenant la fente longitudinale et le faisceau d'illumination en nappe, et présente une extrémité ouverte orientée vers l'électrode de multiplication proportionnelle 13.

La structure multicanaux 121 peut être formée par un matériau tel que le verre au plomb par exemple, l'impact du rayonnement ionisant sur la structure précitée ayant pour effet d'engendrer des électrons, lesquels sont alors ensuite libérés dans l'espace de dérive pour engendrer les phénomènes d'avalanche précités.

Une description plus détaillée du convertisseur 121 et du mode opératoire de ce dernier dans plusieurs variantes successives sera maintenant donnée en liaison avec les figures 4a à 4d.

Sur les figures 4a et 4b, on a représenté selon une coupe longitudinale le convertisseur 121 tel que représenté précédemment en figure 3.

Le convertisseur 121 de rayons X est réalisé par une structure microcanaux, cette structure pouvant être une structure normalement disponible dans le commerce et commercialisée par les sociétés PHILIPS ou HAMMAMUTSU.

Un tel convertisseur présente une importance pratique majeure car il permet de réduire beaucoup la dimension du dispositif de détection dans le sens de propagation du rayonnement ionisant source-objet.

Ainsi qu'on l'a représenté sur les figures 4a et 4b, le convertisseur 121 est formé par un réseau de microcanaux, chacun étant noté 121i, constitués en fait par des tubes de verre placés côte à côte. Les tubes de verre ont une épaisseur de l'ordre de 2 µm, la paroi des tubes de verre portant la référence 1211i sur les figures précitées. La hauteur h de l'ensemble, c'est-à-dire sensiblement des tubes de verre, est de l'ordre de 1 mm.

Un dépôt métallique d'or est réalisé sur les faces de la structure microcanaux, ce dépôt métallique d'or portant les références 1210a, 1210b sur les figures 4a et 4b. Les dépôts métalliques d'or sont réalisés de façon à constituer pour chaque trou 121i un trou traversant.

Le diamètre de chaque trou 121i peut par exemple être compris entre 10 µm et 20 à 30 µm.

On comprend que la structure microcanaux ainsi réalisée permet, à titre d'exemple non limitatif, pour des trous de diamètre 12 µm et une paroi des tubes de verre d'une épaisseur de 2 µm par exemple, de réaliser une structure dont 25% du volume est occupé par le verre. Une telle structure présente une densité moyenne de 0,7 g/cm³ alors que, en l'absence de structure microcanaux, le gaz présent dans la chambre tel que le xénon par exemple, sous pression de 5 bars, présente une densité de 0,03 g/cm³ sensiblement.

L'introduction de la structure microcanaux permet donc un gain d'un facteur 20 de densité moyenne, et donc une probabilité de capture correspondante, laquelle compense largement la différence des coefficients d'absorption du verre et du xénon pour les photons du rayonnement ionisant utilisé.

Avec des tubes d'une paroi d'épaisseur 2 µm, les photo-électrons ou les électrons Compton ont une importante probabilité de sortir des parois de verre et d'émerger dans les trous constituant les microcanaux s'ils présentent une énergie supérieure à quelques KeV.

Le problème qui apparaît alors est seulement de produire suffisamment d'électrons d'ionisation dans le gaz contenu dans chacun des trous 121i et d'attirer ces électrons dans le volume de dérive ou de détection qui suit.

Dans ce but, et conformément à un aspect particulièrement avantageux du dispositif objet de la présente invention, un champ électrique E intense est créé au sein de chaque trou, ce champ étant sensiblement longitudinal et parallèle à l'axe de chaque trou 121i.

Dans ce but, les parois de chaque trou 121i comportent un revêtement 1212i constitué par un matériau électriquement conducteur présentant une résistivité élevée, ce revêtement étant bien entendu électriquement connecté aux électrodes constituées par le revêtement d'or 1210a, 1210b.

Dans ces conditions, il est alors possible d'appliquer soit une tension de dérive, notée VD, ainsi que représentée sur la figure 4a entre les électrodes 1210a et 1210b, tout électron d'ionisation émergeant dans l'un des trous 121i étant soumis alors à un phénomène de dérive du fait de l'existence du champ électrique E_{D} représenté sur la figure 4a.

On indique que le revêtement 1212i de chaque trou peut être formé par un film de plomb de quelques dizaines d'Angströms d'épaisseur.

Le gaz utilisé dans la chambre de dérive peut alors être soit un mélange d'argon et de 10% de méthane, soit de xénon comportant 10% de diméthyléthane.

En ce qui concerne la tension de dérive VD appliquée sur les électrodes 1210a, 1210b, on indique que celle-ci peut être prise égale à -2Kvolts pour l'électrode 1210a par rapport à l'électrode 1210b, ce qui permet d'engendrer un champ de dérive E_{D} suffisant pour assurer la dérive des électrons dans chacun des trous.

Au contraire, ainsi que représenté en figure 4b, pour une structure identique à celle de la figure 4a, il est également possible d'appliquer une tension plus importante sur les électrodes 1210a, 1210b, cette tension étant notée VM, pour engendrer au niveau de chaque trou 121i un champ électrique de multiplication, noté E_{M}, ce champ de multiplication permettant dans chacun des trous de provoquer un phénomène d'avalanche des électrons d'ionisation, le phénomène d'avalanche étant noté Av sur la figure 4b.

Les électrons multipliés peuvent alors être transférés ensuite, au moins partiellement, dans l'espace qui suit où ils sont dérivés, soit vers l'espace de multiplication tel qu'une chambre à fils ainsi que décrit précédemment dans la description, soit vers un espace de détection tel qu'un espace de détection à faces parallèles, à microbandes par exemple.

D'une manière générale, on indique que les paramètres des tubes de verre, c'est-à-dire diamètre des orifices ou trous 121i et épaisseur des parois 1211i de ces derniers, sont choisis en fonction de l'énergie du rayonnement ionisant X ou gamma à détecter.

Ainsi, pour un rayonnement à faible énergie, on préférera des trous ou orifices de diamètre compris entre 10 et 15 µm par exemple, les trous et/ou orifices de diamètre plus important étant réservés au rayonnement ionisant d'énergie plus élevé.

Par exemple, pour des rayons X d'énergie 25 keV utilisés en mammographie, on pourra utiliser de préférence des tubes microcanaux dont les parois sont minces, soit des parois d'épaisseur 2 µm mentionnés précédemment.

Pour des rayons X ou gamma d'énergie 150 keV, on choisira de préférence, en vue de l'obtention d'une plus grande efficacité, des structures microcanaux constituées par des tubes dont les parois présentent une épaisseur de l'ordre de 100 µm.

Enfin, dans le cas de la radiographie industrielle utilisée pour la visualisation des corps opaques, les rayonnement utilisés alors, présentant des énergies de quelques MeV, des tubes plus épais peuvent être utilisés.

En ce qui concerne les diamètres des tubes 121i, on indique que ces diamètres sont compris dans les plages de valeurs précédemment mentionnées dans la description.

Dans le mode de réalisation décrit, dans lequel la hauteur h sur laquelle il est nécessaire d'extraire les électrons est de l'ordre de 1 mm, le mode opératoire pour l'extraction de ces électrons, ne présente pas de difficulté majeure.

Pour des trous réalisés sur une hauteur h = 0,3 mm par exemple, il est possible d'obtenir un très bon rendement lorsque le gaz utilisé est un gaz tel que l'argon à la pression atmosphérique.

Par contre, lorsque des trous 121i très fins, de faible diamètre, sont utilisés, il est alors préférable d'utiliser un gaz sous pression pour :
- augmenter le nombre d'électrons d'ionisation sur une distance courte,
- diminuer la diffusion des électrons qui varie comme 1/√P où P représente la pression du gaz, ainsi que leur capture par les parois des tubes.

On indique en outre que des espaces de multiplication et de dérive multi-étages tels que publiés par G.CHARPAK et F.SAULI, Phys.Lett. 78B (1978) 523, décrivant les mécanismes de multiplication d'électrons et de transfert dans les espaces de dérive, peuvent être utilisés tels qu'ils sont appliqués avec la structure en tubes précitée.

En référence à la figure 4d, on indique également qu'afin de réaliser une détection multi-énergie, c'est-à-dire une détection pour des rayonnements ionisants complexes formés par des rayonnements ou raies d'énergie distincts, il est possible, ainsi que représenté en figure 4b, d'utiliser une structure microcanaux 121 de structure complexe formée en fait par une pluralité de structures élémentaires, notées à titre d'exemple non limitatif 121₁, 121₂, 121₃.

Chaque structure microcanaux élémentaire constitue en fait un convertisseur élémentaire, les structures étant placées côte à côte dans la direction moyenne de propagation du rayonnement ionisant, ainsi que représenté sur la figure 4d.

Selon une caractéristique avantageuse de la structure microcanaux ainsi réalisée, on indique que chaque convertisseur élémentaire est formé par une structure microcanaux dont les microcanaux présentent des paramètres de diamètre des trous et d'épaisseur de paroi choisis en fonction de la dureté, c'est-à-dire de l'énergie, de chaque composante ou raie du rayonnement complexe utilisé.

Ainsi que représenté sur la figure 4d, on indique que, pour un rayonnement ionisant complexe formé par trois raies de faible, 1, moyenne, 2, et haute énergie, 3, on peut alors utiliser des convertisseurs élémentaires 121₁, 121₂, 121₃, lesquels forment le convertisseur 121, les trous de diamètre le plus faible étant utilisés pour le premier convertisseur 121₁ sur le trajet du rayonnement ionisant, lequel est destiné à détecter la raie d'énergie la plus faible, le convertisseur élémentaire 121₂ présentant des trous de diamètre moyen étant adjacent au premier convertisseur élémentaire 121₁ et étant destiné à détecter la raie d'énergie moyenne 2, et le troisième convertisseur élémentaire 121₃ étant placé immédiatement après le convertisseur élémentaire 121₂ et destiné à détecter la raie d'énergie la plus élevée.

On comprend bien sûr que le choix des valeurs des paramètres relatifs aux tubes constituant chaque convertisseur élémentaire est déterminé ainsi que décrit précédemment dans la description, et que les dimensions d'épaisseur de chaque convertisseur élémentaire dans la direction de propagation du rayonnement ionisant, dimensions notées e₁, e₂, e₃, dans la direction de propagation du rayonnement ionisant utilisé, sont déterminées par l'expérience et directement liées au libre parcours moyen des particules X ou gamma des raies ou composantes du rayonnement utilisé.

On a ainsi décrit un dispositif d'imagerie médicale en rayonnement ionisant X ou gamma particulièrement perfectionné dans la mesure où, par rapport aux dispositifs de l'art antérieur, des simplifications de construction de la chambre de dérive notamment ont été apportées, et où, grâce à la mise en oeuvre le cas échéant d'une détection par une matrice bidirectionnelle en coordonnées cartésiennes, il est possible notamment d'envisager des applications dans lesquelles l'utilisateur peut alors faire varier la distance séparant la matrice de détection utilisée de la source S.

En outre, on comprend également que dans le premier mode de réalisation, l'utilisation d'un gradient de potentiel appliqué sur la deuxième cathode 14 permet, d'une part, de simplifier la construction de l'ensemble du dispositif d'imagerie médicale, mais également de mettre en oeuvre des réglages fins des potentiels successifs appliqués aux bandes conductrices.

## Revendications

1. Dispositif d'imagerie médicale en rayonnement ionisant X ou gamma, comportant une source de rayonnement ionisant (S) selon un faisceau divergent, une fente longitudinale (F) formant diaphragme permettant de délivrer un faisceau d'illumination en nappe distribué sensiblement dans un plan contenant la fente longitudinale (F) et des moyens de détection d'un faisceau transmis par un corps à observer (CO) illuminé par le faisceau d'illumination en nappe, ces moyens de détection comportant une chambre à dérive et une chambre à fils remplies d'un gaz permettant d'engendrer des électrons, caractérisé en ce que lesdites chambres comportent, agencés dans une direction orthogonale au plan contenant la fente (F) et le faisceau d'illumination en nappe :
- un espace de dérive des électrons (12) comportant une première électrode de cathode (11),
- une anode (13) de multiplication proportionnelle des électrons pour engendrer des électrons multipliés et des ions correspondants,
- une deuxième électrode de cathode (14) placée au voisinage de l'anode (13) de multiplication, ladite anode (13) de multiplication et la deuxième électrode de cathode (14) étant constituées par des éléments conducteurs (130, 131 et 140) s'étendant dans deux plans parallèles au plan du faisceau d'illumination en nappe selon des directions sensiblement orthogonales pour permettre un repérage bidimensionnel des électrons dans ce plan,
- des moyens de comptage (3), les éléments conducteurs (130, 131) constituant l'anode (13) de multiplication proportionnelle et (140) constituant la deuxième cathode (14) étant reliés aux dits moyens de comptage (3) des impacts d'électrons.

2. Dispositif selon la revendication 1, caractérisé en ce que ladite anode de multiplication (13) est formée par des fils conducteurs (130, 131) formant une grille de multiplication proportionnelle, lesdits fils conducteurs (130, 131), dans le plan contenant la grille de multiplication, étant dirigés de façon à converger vers la source (S) du faisceau d'illumination, et en ce que ladite deuxième électrode de cathode (14) est formée par des bandes électriquement conductrices concentriques (140) centrées sur la source (S) du faisceau d'illumination, l'ensemble des bandes électriquement conductrices (140) étant soumis à un gradient de potentiel, croissant selon la position de chaque bande par rapport à la source (S) du faisceau d'illumination, ce qui permet de compenser la variation du gain de multiplication des électrons de l'électrode d'anode (13) du fait de la divergence des fils constituant celle-ci, et d'effectuer ledit repérage bidimensionnel selon une détection en coordonnées polaires de l'impact des électrons.

3. Dispositif selon la revendication 2, caractérisé en ce que celui-ci comporte des moyens de polarisation électrique (2, V14) permettant d'appliquer à chaque bande (140) un potentiel électrique Vref + iΔV pour engendrer ledit gradient de potentiel.

4. Dispositif selon la revendication 1, caractérisé en ce que ladite anode de multiplication (13) est formée par les fils conducteurs (130, 131) formant une grille de multiplication proportionnelle, lesdits fils conducteurs, dans le plan contenant la grille de multiplication (13), sont dirigés vers la source (S) et parallèles entre eux, et en ce que ladite deuxième électrode de cathode (14) est formée par des bandes électriquement conductrices (140) parallèles entre elles et s'étendant dans une direction orthogonale à celle des fils conducteurs (130, 131) formant l'anode de multiplication proportionnelle, ce qui permet d'effectuer ledit repérage bidimensionnel selon une détection en coordonnées cartésiennes de l'impact des électrons.

5. Dispositif selon l'une des revendications précédentes, caractérisé en ce qu'il comporte dans l'espace de dérive un convertisseur (121) rayons ionisants-électrons constitué par une structure mécanique multicanaux (121₂).

6. Dispositif selon la revendication 5, caractérisé en ce que le convertisseur (121) rayons ionisants-électrons est formé par une pluralité de convertisseurs élémentaires (121₁, 121₂, 121₃) alignés selon la direction moyenne de propagation du rayonnement ionisant, chaque convertisseur élémentaire (121₁, 121₂, 121₃) étant adapté à la détection des composantes de dureté différente d'un rayonnement ionisant X ou gamma complexe.

## Patentansprüche

1. Vorrichtung zur Erzeugung medizinischer Bilder mittels ionisierender Röntgen- oder Gammastrahlen, mit einer Quelle (S) für ionisierende Strahlung in Form eines divergierenden Strahlenbündels, mit einem Längsschlitz (F), der eine Membran bildet und die Lieferung eines flachen Bestrahlungs-Strahlenbündels ermöglicht, das im wesentlichen in einer Ebene verteilt ist, die den Längsschlitz (F) enthält, und mit Detektoreinrichtungen für ein Strahlenbündel, das von einem zu beobachtenden Körper (CO) übertragen wird, der durch das flache Bestrahlungs-Strahlenbündel bestrahlt wird, wobei die Detektorvorrichtungen eine Driftkammer und eine Drahtkammer umfassen, die mit einem die Erzeugung von Elektronen ermöglichenden Gas gefüllt sind,
dadurch gekennzeichnet, dass die genannten Kammern in einer Richtung senkrecht zu der den Schlitz (F) und das ebene Bestrahlungs-Strahlenbündel enthaltenden Ebene angeordnet Folgendes umfassen:
- einen Elektronen-Driftraum (12), der eine erste Kathodenelektrode (11) aufweist,
- eine proportionale Elektronenvervielfacher-Anode (13) zur Erzeugung vervielfachter Elektronen und entsprechender Ionen,
- eine zweite Kathodenelektrode (14), die in der Nähe der Vervielfacheranode (13) angeordnet ist, wobei die Vervielfacheranode (13) und die zweite Kathodenelektrode (14) durch Leiterelemente (130, 131 und 140) gebildet sind, die sich in zwei Ebenen parallel zur Ebene des ebenen Bestrahlungs-Strahlenbündels in im wesentlichen orthogonalen Richtungen erstrecken, um eine bidimensionale Erfassung der Elektronen in dieser Ebene zu ermöglichen,
- Zähleinrichtungen (3), wobei die Leiterelemente (130, 131), die die proportionale Vervielfacher-Anode (13) bilden, und die Leiterelemente (140), die die zweite Kathode (14) bilden, mit den Zähleinrichtungen (3) für das Aufprallen von Elektronen verbunden sind.

2. Vorrichtung nach Anspruch 1,
dadurch gekennzeichnet, dass die genannte Vervielfacheranode (13) durch Leiterdrähte (130, 131) gebildet ist, die ein proportionales Vervielfachergitter bilden, wobei die genannten Leiterdrähte (130, 131) in der das Vervielfachergitter enthaltenden Ebene derart gerichtet sind, dass sie in Richtung auf die Quelle (S) des Bestrahlungs-Strahlenbündels konvergieren, und dass die genannte zweite Kathodenelektrode (14) durch konzentrische elektrisch leitende Streifen (140) gebildet ist, die auf der Quelle (S) des Bestrahlungs-Strahlenbündels zentriert sind, wobei die Gesamtheit der elektrisch leitenden Streifen (140) einem Gradienten des Potentials unterworfen ist, das entsprechend der Position jedes Streifens bezüglich der Quelle (S) des Bestrahlungs-Strahlenbündels anwächst, was eine Kompensation der Verstärkungsänderung der Elektronenvervielfachung der Anodenelektrode (13) aufgrund der Divergenz der sie bildenden Drähte und die Durchführung der bidimensionalen Erfassung gemäss einer Detektion in Polarkoordinaten für das Auftreffen der Elektronen ermöglicht.

3. Vorrichtung nach Anspruch 2,
dadurch gekennzeichnet, dass sie elektrische Polarisationseinrichtungen (2, V14) aufweist, die das Anlegen eines elektrischen Potentials (vref+IΔV) an jeden Streifen (140) zur Erzeugung des genannten Potentialgradienten ermöglicht.

4. Vorrichtung nach Anspruch 1,
dadurch gekennzeichnet, dass die genannte Vervielfacheranode (13) durch die Leiterdrähte (130, 131) gebildet ist, die ein proportionales Vervielfachergitter bilden, wobei die Leiterdrähte in der das Vervielfachergitter (13) bildenden Ebene auf die Quelle (S) gerichtet und zueinander parallel sind, und dass die genannte zweite Kathodenelektrode (14) durch elektrisch leitende Streifen (140) gebildet ist, die zueinander parallel sind und sich in einer Richtung orthogonal zu der der Leiterdrähte (130, 131) erstrecken, die die proportionale Vervielfacheranode bilden, wodurch die Durchführung der bidimensionalen Erfassung gemäss einer Detektion mit kartesischen Koordinaten für das Auftreffen der Elektronen ermöglicht wird.

5. Vorrichtung nach einem der vorhergehenden Ansprüche,
dadurch gekennzeichnet, dass sie in dem Driftraum einen Wandler (121) zur Umwandlung von ionisierenden Strahlen in Elektronen aufweist, der durch eine mechanische Mehrkanal-Struktur (121₂) gebildet ist.

6. Vorrichtung nach Anspruch 5,
dadurch gekennzeichnet, dass der Wandler (121) zur Umwandlung ionisierender Strahlen in Elektronen durch eine Vielzahl von elementaren Wandlern (121₁, 121₂, 121₃) gebildet ist, die entlang der mitteleren Ausbreitungsrichtung der ionisierenden Strahlung ausgerichtet sind, wobei jeder elementare Wandler (121₁, 121₂, 121₃) für die Detektion von Bestandteilen mit unterschiedlicher Härte einer komplexen ionisierenden X- oder Gammastrahlung ausgebildet ist.

## Claims

1. Medical imaging device using X or gamma ionizing radiation, comprising a source (S) of ionizing radiation in a divergent beam, a longitudinal slit (F) forming a diaphragm making it possible to deliver a sheet-form illumination beam distributed substantially in a plane containing the longitudinal slit (F), and means for detecting a beam transmitted by a body (CO) to be observed, illuminated by the sheet-form illumination beam, said detection means comprising a drift chamber and a multiwire chamber which are filled with a gas making it possible to generate electrons, characterized in that said chambers comprises, arranged in a direction orthogonal to the plane containing the slit (F) and the sheet-form illumination beam:
- a drift space (12) for the electrons, comprising a first cathode electrode (11),
- an electron proportional multiplier anode (13) for generating multiplied electrons and corresponding ions,
- a second cathode electrode (14), placed in the vicinity of the multiplier anode (13), said multiplier anode (13) and the second cathode electrode (14) consisting of conductor elements (130, 131 and 140) extending in two planes parallel to that of the sheet-form illumination beam, along substantially orthogonal directions, in order to permit two-dimensional localization of the electrons in this plane,
- counting means (3), said conductor elements (130, 131) forming said multiplier anode electrode (13) and (140) forming said second cathode electrode (14) being connected to said means (3) for counting the impact of electrons on them.

2. Device according to Claim 1, characterized in that said multiplier anode (13) is formed by conductor wires (130, 131) forming a proportional multiplier grid, said conductor (130, 131) wires, in the plane containing the multiplier grid, being directed in such a way as to converge toward the source (S) of the illumination beam, and in that said second cathode electrode (14) is formed by concentric electrically conductive bands (140) centered on the source (S) of the illumination beam, the set of electrically conductive bands (140) being subjected to a potential gradient increasing according to the position of each band with respect to the source (S) of the illumination beam, which makes it possible to compensate for the variation in the electron multiplication gain of the anode electrode (13) due to the divergence of the wires constituting it, which makes it possible to perform said two-dimensional localization using detection in polar coordinates of the impact of the electrons.

3. Device according to Claim 2, characterized in that it includes electrical polarization means (2, V14) making it possible to apply an electrical potential Vref + iΔV to each band (140) in order to generate said potential gradient.

4. Device according to Claim 1, characterized in that said multiplier anode (13) is formed by conductor wires (130, 131) forming a proportional multiplier grid, said conductor wires, in the plane containing the multiplier grid (13), being directed toward the source (S) and parallel to one another, and in that said second cathode electrode (14) is formed by electrically conductive bands (140), parallel to one another and extending in a direction orthogonal to that of the conductor wires (130, 131) forming the proportional multiplier grid, which makes it possible to perform said two-dimensional localization using detection in cartesian coordinates of the impact of the electrons.

5. Device according to one of the preceding Claims, characterized in that it includes, in the drift space, an ionizing-ray/ electron converter (121) consisting of a multichannel mechanical structure (121₂).

6. Device according to Claim 5, characterized in that the ionizing-ray/electron converter (121) is formed by a plurality of elementary converters (121₁, 121₂, 121₃), aligned with the mean propagation direction of the ionizing radiation, each elementary converter (121₁, 121₂, 121₃) being designed for detecting components with different hardness of a complex X or gamma ionizing radiation.
